# NEUE EUROPÄISCHE PATENTSCHRIFT

(11) **EP 0 129 699 B2**
(45) Veröffentlichungstag und Bekanntmachung des Hinweises auf die Entscheidung über den Einspruch: **18.11.1993**
(45) Hinweis auf die Patenterteilung: 03.08.1988
(21) Anmeldenummer: 84105658.3
(22) Anmeldetag: 18.05.1984
(51) Int. Cl.: C08F 2/22, C08F 291/00, C08F 265/06

(54) **Verfahren zur Herstellung bi- oder polymodaler wässriger Kunststoffdispersionen**
Process for the preparation of bi- or polymodal polymer dispersions
Procédé de préparation de dispersions di- ou polymodale de polymères

(30) Priorität: 27.05.1983 DE 3319340
(43) Veröffentlichungstag der Anmeldung: 02.01.1985
(73) Patentinhaber: Röhm GmbH, 64293 Darmstadt (DE)
(72) Erfinder: Siol, Werner, Dr., D-6100 Darmstadt-Eberstadt (DE); Klesse, Wolfgang, Dr., D-6500 Mainz 31 (DE); Sütterlin, Norbert, Dr., D-6105 Ober-Ramstadt (DE); Rauch, Hubert, D-6108 Weiterstadt 1 (DE)

(56) Entgegenhaltungen:
- EP-A- 0 025 561
- EP-A- 0 081 083
- DE-A- 1 910 488
- DE-A- 2 931 127
- DE-B- 1 745 220
- FR-A- 2 344 579
- FR-A- 2 441 633
- US-A- 4 254 004
- RESEARCH DISCLOSURE, Nr. 189, Januar 1980, Seite 7,Industrial Opportunities Ltd., Homewell, Havant, Hampshire, GB; "Nr. 18905. Process for preparing synthetic polymer latexes having multimodal particle size distribution"
- Houben Weyl, Band XIV/1, 1961, pp. 1050-1051
- Kolloid-Zeitschrift für Polymere, Bd. 227, pp. 92-107
- J. Polym. Sci., Vol. 20, p 225. 1956
- J. Colloid Sci., vol. 11, pp. 135-149, 1956
- J. Applied Polymer Sci., vol. I, no. 3, pp. 323-328, 1959
- J. Applied Polymer Sci., vol. 21, pp 839ff, 1977
- Makromol. Chem., vol. 177, pp. 1549-1565, 1976

## Beschreibung

### Technisches Gebiet

Die Erfindung betrifft ein Verfahren zur Herstellung von bi- oder polymodalen Kunststoffdispersionen. Man versteht darunter Dispersionen, deren Partikel unterschiedlich grosse Teilchen mit mehreren, deutlich getrennten Maxima in der Teilchengrössenverteilungskurve aufweisen. Dispersionen mit zwei solchen Maxima heissen bimodal, solche mit mehr als zwei Maxima polymodal. Im Vergleich zu Dispersionen mit nur einem Teilchengrössenmaximum haben bi- und polymodale Dispersionen eine geringere Viskosität, sind nicht strukturviskos und ergaben einen besseren Ver- lauf bei der Filmbildung sowie Filme mit verbesserter Wasserbeständigkeit.

### Stand der Technik

Nach DE-OS 2 931 127 lassen sich bimodale Dispersionen durch Mischen von Dispersionen mit unterschiedlicher mittlerer Teilchengrösse herstellen.

Ein anderes Verfahrensprinzip besteht darin, bei einem zweistufigen Emulsionspolymerisationsverfahren in der zweiten Stufe eine solche zusätzliche Emulgiermittelmenge zuzufügen, dass neue- Teilchen gebildet werden, die im Wachstum hinter den ursprünglich gebildeten Teilchen zurückbleiben und ein zweites Maximum in der Verteilungskurve bilden. Dieses Prinzip wird bei den Verfahren der DE-OS 2 837 992 und 2 931 127 sowie der US-PS 4 254 004 angewendet. Es ist jedoch schwierig, bei diesen Verfahren reproduzierbare Ergebnisse zu erhalten, weil die Eigenschaften der Dispersion stark von der Anzahl der in der zweiten Stufe neugebildeten Teilchen abhängt. Diese Anzahl hängt auf schwer überschaubare Weise von einer Vielzahl von Faktoren ab.

Nach der FR-A-2 344 579 erhält man eine «Mikrosuspension» von PVC-Partikeln mit mehr als zwei Teilchengrossenmaxima, indem man eine vorgebildete Mikrosuspension mit zwei weiteren vorgebildeten «Mikrosuspensionen» oder Dispersionen, von denen wenigstens eine einen organisch löslichen Initiator in den Partikeln enthält, mischt und in Abwesenheit zusätzlicher Initiatoren weiteres Monomer zusetzt. Dabei wachsen die Partikel, die den Initiator enthalten, weiter an, bis der gewünschte hohe Feststoffgehalt erreicht ist, während die initiatorfreien Partikel ihre Grösse beibehalten. Die Herstellung von initiatorhaltigen «Mikrosuspensionen» unterscheidet sich von durch die wesentlich längere Polymerisationsdauer und die Bildung von verhältnismässig groben Teilchen, die sich absetzen, wenn sie nicht durch Rühren im dispergierten Zustand gehalten werden. Die aus diesem Verfahren hervorgehenden Produkte sind als Austauschprodukt für wässrige Kunststoffdispersionen nur in Ausnahmefallen verwendbar.

Gegenstand der am 1.6.1983 veröffentlichten deutschen Patentanmeldung P 3 147 008.4 (bzw. der am 15.6.83 veröffentlichten Patentanmeldung EP-A-0 081 083) ist ein Verfahren zur, Herstellung bi- oder polymodaler hochkonzentrierter Kunststoffdispersionen, bei dem man wenigstens zwei Latizes, enthaltend Kunststoffpartikel unterschiedlicher Teilchengrösse mischt und in Gegenwart des Gemisches Monomere polymerisieren lässt, bis der Feststoffgehalt über 58 Gew.-% liegt. Die in dem Gemisch der vorgebildeten Latizes enthaltenen Kunststoffe machen bei der Durchführung dieses Verfahrens stets mehr als die Hälfte des im Endprodukt enthaltenen Kunststoffes, in der Regel 60-70 Gew.-%, aus. Man benötigt daher verhältnismässig grosse Mengen der vorgefertigten Latizes, von denen wenigstens einer in entsprechenden Mengen vorrätig gehalten werden muss, wfihrend der andere jeweils in einer vorausgehenden Verfahrensstufe erzeugt werden kann. Die Steuerung der Grösse der feineren Latexteilchen ist bei diesem Verfahren nur mit Einschränkung möglich.

### Aufgabe und Lösung

Ziel der Erfindung ist es, ein verbessertes Verfahren zur Herstellung von bi- oder polymodalen Kunststoffdispersionen mit einem Feststoffgehalt bis zu etwa 58 Gew.-% durch Emulsionspolymerisation von ungesättigten Monomeren in wässriger Phase, die einen wasserlöslichen Initiator und ein Emulgiermittel enthält, und Zugabe eines Saatlatex während der Polymerisation zu finden. Insbesondere soll durch die Verbesserung bewirkt werden, den Bedarf an dem vorgefertigten Saatlatex herabzusetzen und die Teilchengrössenverteilung sicherer auf reproduzierbare Werte einzustellen und auf diese Weise bi- oder polymodale Kunststoffdispersionen mit gleichbleibenden Anwendungseigenschaften herzustellen.

Die Aufgabe wird erfindungsgemäss dadurch gelöst, dass der Saatlatex zugesetzt wird, bevor mehr als 40 Gew.-% der Monomeren polymerisiert sind, dass die Teilchen des Saatlatex um einen Faktor zwischen 2 und 15 kleiner sind als die durch die Emulsionspolymerisation bereits gebildeten Teilchen und dass die Gewichtsmenge der Kunststoffteilchen in dem Saatlatex 10 Gew.-%, bezogen auf das Gewicht der Monomeren, nicht überschreitet, und zu dem Gewicht der bereits polymerisierten Monomeren in einem Verhältnis 1 : 4 bis 1 : 500 steht, wobei die Gewichtssumme der wäßrigen Phase mehr als 70 Gew.-Teile, bezogen auf 100 Gew.-Teile der Gewichtssumme der Monomeren und des in dem Saatlatex enthaltenen Kunststoffes, ausmacht.

### Vorteile

Das Verfahren der Erfindung gestattet die Herstellung von bi- und polymodalen Kunststoffdispersionen ohne wesentliche Abfinderung der gebräuchlichen Verfahren, durch die konventionelle Kunststoffdispersionen mit nur einem Maximum in der Teilchenverteilungskurve herstellbar sind. Die Ausbildung einer bimodalen oder polymodalen Teilchengrössenverteilung gelingt allein durch den ein- oder mehrmaligen Zusatz verhältnismässig geringer Mengen eines Saatlatex in einem frühen Stadium der Emulsionspolymerisation. Gegenüber Verfahrensweisen, bei denen durch erneuten Emulgatorzusatz eine zweite Teilchenbildungsphase eingeleitet wird, zeichnet sich das Verfahren der Erfindung durch die genauere Reproduzierbarkeit aus, da sich die Zahl der zusälzlichen Keime mittels der Saatlatexmenge sehr genau einstellen lässt. Im Gegensatz zu Verfahren, bei denen erhebliche Mengen an Saatlatizes im Laufe der Polymerisation zugesetzt werden, kommt das Verfahren der Erfindung mit sehr geringen Saatlatexmengen aus. Dadurch ist das Verfahren der Erfindung zugleich einfach und sicher reproduzierbar.

Beim Verfahren der Erfindung entsteht eine bi- oder polymodale Dispersion, die mindestens zwei Teilchenfamilien von unterschiedlichem durchschnittlichen Teilchendurchmesser enthält. Die grösste Teilchenfamilie hat einen mittleren Teilchendurchmesser nicht über 0,6 µm und die nachstkleinere Teilchenfamilie einen Durchmesser von höchstens zwei Dritteln des Durchmessers der grösseren Teilchenfamilie.

Die Monomeren
die erfindungsgemäss der Emulsionspolymerisation unterworfen werden, sind wenigstens zu einem erheblichen Teil in Wasser schwerlöslich, worunter eine Löslichkeit von weniger als 10 Gew.-%, insbesondere weniger als 2 Gew.-%, bei 20°C verstanden wird. Der Anteil der schwerlöslichen Monomeren muss wenigstens so gross sein, dass das entstehende Emulsionspolymerisat wenigstens unter den Polymerisationsbedingungen in der Wasserphase unlöslich ist und in Form dispergierter Latexteilchen ausfallt. Wenn Monomerengemische polymerisiert werden, so bestehen sie vorzugsweise aus mindestens 70 und besonders bevorzugt aus mindestens 90 Gew.-% schwerlöslichen Monomeren.

Zu den geeigneten Monomeren gehören beispielsweise die Alkylester der Acryl- und Methacrylsäure mit 1 bis 20 C-Atomen im Alkylrest, Styrol und seine Homologen, Vinylester niederer Carbonsäuren, Diene und niedere α-Olefine. Sie bilden im allgemeinen die Hauptmonomeren, die mehr als 50 Gew.-% der Kunststoffe aufbauen. Als modifizierende Monomere, die in der Regel weniger als 50% des Kunststoffes bilden, seien Acryl- und Methacrylnitril, Acryl- und Methacrylamid, deren N-Methylolverbindungen und N-Methyloläther, Hydroxylalkylester der Acryl- und Methacrylsäure, gegebenenfalls quaternierte Aminoalkylester und Aminoalkylamide der Acryl- und Methacrylsäure, ungesättigte Carbonsäuren, wie Acryl- und Methacrylsäure, Malein-, Fumar- und Itakonsaure und die Halbester der zweibasischen Carbonsäuren, sowie Maleinsäureanhydrid genannt.

Eine bevorzugte Klasse von Kunststoffen ist überwiegend, d.h. zu 70% oder mehr, aus Acryl- und/oder Methacrylsäurealkylestern oder deren Gemisch mit Styrol aufgebaut. Vorzugsweise enthalten sie eine kleine Menge einer α,β-ungesättigten Carbonsäure.

Der Saatlatex
besteht aus einer wässrigen Dispersion von Kunststoffpartikeln, die um einen Faktor zwischen 2 und 15 kleiner sind als die Teilchen des Emulsionspolymerisats zu dem Zeitpunkt, zu dem der Saatlatex zugesetzt wird. Die Saatlatexteilchen haben eine mittlere Teilchengrösse von z.B. 0,01 bis 0,2 µm, vorzugsweise 0,02-0,1 µm. Als mittlere Teilchengrösse wird der Gewichtsmittelwert des Teilchendurchmessers angesehen, der sich z.B. nach der Methode von H. Lange, Kolloid-Zeitschrift, Zeitschrift für Polymere 223, 24 (1968) ermitteln lässt. Eine moderne Messmethode beruht auf der Messung der Streulichtschwankungen, die sich infolge der Brown'schen Bewegung der La- texpartikel in einem Laserstrahl ergeben.

Der Saatlatex wird in an sich bekannter Weise durch Emulsionspolymerisation in einer emulgiermittelhaltigen wässrigen Phase erzeugt. Durch eine Emulgiermittelkonzentration nahe oder etwas oberhalb der kritischen Mizellbildungskonzentration wird eine sehr grosse Zahl kleiner Latex-Keime gebildet, die man durch ein entsprechendes Monomerangebot zu einer Teilchengrösse im oben genannten Bereich anwachsen lässt. Die Monomeren, aus denen der Saatlatex gebildet wird, können die gleichen sein, die zur Emulsions polymerisation gemäss der Erfindung eingesetzt werden. Jedoch können auch andere Monomere verwendet werden, für deren Auswahl die gleichen Grundsätze gelten, die oben im Abschnitt «Monomere» erläutert wurden.

Der Saatlatex kann einen Polymerisatgehalt von 20 bis 50 Gew.-%, vorzugsweise 30 bis 40 Gew.-% haben. Geringere Polymerisatgehalte erhöhten die erforderlichen Einsatzmengen, während höhere Polymerisatgehalte wegen der hohen Viskosität und wegen Stabilisierungsproblemen bei der Herstellung und Lagerung nachteilig sind. Der Saatlatex ist in der Regel über längere Zeit lagerfähig und kann für eine Vielzahl von Produktionsansätzen der bimodalen Kunststoffdispersion vorrätig gehalten werden.

Es ist ein wesentliches Ziel der Erfindung, den Bedarf an dem Saatlatex möglichst gering zu halten. Die Saatlatexmenge kann umso kleiner sein, je früher während der Emulsionspolymerisation sie zugesetzt wird. Dies kann frühestens geschehen, wenn die mittlere Teilchengrösse des entstehenden Emulsionspolymerisats den doppelten Wert der mittleren Teilchengrösse des Saatlatex erreicht hat. Spätestens erfolgt die Zugabe, bevor 40 Gew.-% der Monomeren bei der Emulsionspolymerisation umgesetzt worden sind. Der bevorzugte Zeitraum liegt zwischen dem Umsatz von 2 und 30 Gew.-% der Monomeren. Die Menge des zuzusetzenden Saatlatex richtet sich nach der zum Zeitpunkt des Zusatzes, bzw. des Beginns dieses Zusatzes, bereits gebildeten Emulsionspolymerisatmenge. Die Menge der Kunststoffteilchen des Saatlatex verhält sich zur Menge des Emulsionspolymerisats wie 1 : 4 bis 1: 500 Gew.-Teile. Die Menge des Emulsionspolymerisats kann mit hinreichender Genauigkeit mit der Menge der bereits eingesetzten Monomeren gleichgesetzt werden. Vorzugsweise liegt das Mengenverhältnis zwischen 1 : 20 und 1: 200 Gew.-Teilen. Das Verhältnis kann umso kleiner gewählt werden, je grösser der Teilchengrössenunterschied zwischen den Teilchen des Saatlatex und den schon gebildeten Emulsionspolymerisationsteilchen ist und je früher die Saatlatexzugabe beginnt. Aus den erwähnten Mengenverhältnissen ergibt sich, dass die Saatlatexmenge nicht mehr als 10 Gew.-%, bezogen auf die Gesamtmenge der Monomeren ausmachen kann. Vorzugsweise liegt diese Menge unter 5 und besonders bevorzugt unter 2 Gew.-% der Monomerenmenge. Der Saatlatex kann auf einmal oder in mehreren Anteilen oder auch mehr oder weniger kontinuierlich innerhalb des erwähnten Umsatzzeitraumes zugesetzt werden.

Während der Polymerisation der Monomeren wachsen die Saatlatexteilchen gleichzeitig mit den Teilchen des Emulsionspolymerisats weiter. Das Wachstum der Teilchen verschiedener Grösse ist nicht völlig gleich. Im Endprodukt bilden die Teilchen mit dem grösseren Durchmesser die über wiegende Masse des dispergierten Kunststoffes, vorzugsweise 60 bis 95 Gew.-%, während die kleinen Teilchen zahlenmässig überwiegen.

Die wässrige Phase
besteht anfänglich aus der vorgelegten Wassermenge, in der die Emulsionspolymerisation gestartet wird, und wird später durch die mit dem Saatlatex eingebrachte Wassermenge und, sofern die Monomeren in Form einer wassrigen Emulsion eingesetzt werden, durch deren Wassergehalt vermehrt.

Die Menge der Wasserphase richtet sich nach dem gewünschten Feststoffgehalt der fertigen Dispersion. Im Verfahren der Erfindung werden insgesamt mehr als 70 Gew.-Teile der wäßrigen Phase, bezogen auf 100 Gew.-Teile der Gewichtssumme der Monomeren und des in dem Saatlatex enthaltenen Kunststoffes, eingesetzt, woraus sich ein Feststoffgehalt der erzeugten Dispersion von weniger als 58,8 Gew.-% ergibt. Die Monomeren können in Form einer 30 bis 80 Gew.-%igen Emulsion zugegeben werden.

### Die Emulgiermittel

Die wässrige Phase, in der die Monomeren polymerisieren, enthält ein gelöstes Emulgiermittel und einen gelösten Initiator. Der Emulgator kann aus einer einzigen oberflächenaktiven Substanz oder aus einem Gemisch mehrerer solcher Substanzen bestehen.

Das Emulgiermittel kann zu Beginn in der Wasserphase vorgelegt werden. Weitere Emulgiermittelmengen können durch die Monomeremulsion eingebracht werden.

Man kann gegebenenfalls auch ein Emulgiermittel in den Monomeren lösen oder eine wässrige Emulgiermittellösung darin dispergieren. Im allgemeinen sollen während der Emulsionspolymerisation keine neuen Teilchen gebildet werden. Das tritt auch nicht ein, wenn die gegebenenfalls zugeführte Emulgiermittelmenge so bemessen und dosiert wird, dass kein freies, d. h. nicht an die Teilchenoberfläche adsorbiertes Emulgiermittel auftritt.

Der Saatlatex kann die für Kunststoffdispersionen üblichen anionischen, kationischen oder nichtionischen niedermolekularen Emulgiermittel mit Tensidcharakter oder verträgliche Mischungen davon in den gebräuchlichen Mengen enthalten. Es ist selbstverständlich, dass die Emulgatorsysteme der wässrigen Phase und des Saatlatex miteinander verträglich sein müssen, was im Zweifelsfalle vorher zu prüfen ist. Im allgemeinen sind anionische Emulgatoren untereinander und mit nicht-ionischen Emulgatoren verträglich. Das gleiche gilt auch für kationische Emulgatoren, während anionische und kationische Emulgatoren meistens miteinander unverträglich sind. Auch bei der Zugabe zusätzlicher Emulgiermittel ist die Verträglichkeit zu beachten. Im Endprodukt liegt die Konzentration an ionischen Emulgiermitteln vorzugsweise im Bereich von 0,01 bis 2 Gew.-%, bezogen auf die Wasserphase.

Die Emulgatoren, die allein oder im Gemisch eingesetzt werden, sind diejenigen, die bei der Emulsionspolymerisation üblicherweise verwendet werden und aus einem hydrophilen und einem hydrophoben Molekülteil zusammengesetzt sind. Ihre Molekulargewichte liegen meistens unter 1000. Wasserlösliche Polymere von höherem Molekulargewicht werden gelegentlich als Schutzkolloide mitverwendet.

Gebräuchliche Emulgatoren enthalten z.B. langkettige Alkylreste mit 8-22 C-Atomen oder Arylreste, insbesondere alkylsubstituierte Arylreste, wie Nonylphenol- oder Triisobutylphenolreste, als hydrophoben Molekülteil und Polyglykoläthergruppen, aufgebaut aus 3 bis 100 Äthylenoxidresten oder Propylenoxidresten als nichtionische hydrophile Gruppen, bzw. Sulfonsäuregruppen, an Polyglykoläthergruppen gebundene Schwefelsäurehalbestergruppen, Phosphonsäuregruppen oder Carboxylgruppen als anionogene Gruppen, bzw. quartäre Ammoniumsalzgruppen als kationogene Gruppen. Typische Vertreter dieser Emulgatorentypen sind Addukte von 3 bis 100 Mol Äthylenoxid an Nonylphenol oder Triisobutylphenol, deren Schwefelsäurehalbester oder Phosphorsäurepartialester.

Die Konzentration der Emulgatoren in der wässrigen Phase soll nur so gross sein, dass sie vollständig an die Oberfläche der Latexteilchen gebunden sind und keine freien Mizellen vorliegen, die zum Ausgangspunkt neuer Teilchen werden könnten. Im allgemeinen sind 0,01 bis 2 Gew.-%, bezogen auf die Wasserphase, an Emulgatoren während der Polymerisation anwesend. Nach Abschluss der Polymerisation werden häufig nichtionische Emulgatoren nachgegeben.

### Der Polymerisationsinitiator

Die Herstellung echter Kunststoffdispersionen mit den für diese Produkte charakteristischen anwendungstechnischen Eigenschaften setzt voraus, dass die Polymerisation durch Radikale in der wässrigen Phase ausgelöst wird. Daher muss die wässrige Phase einen gelösten Polymerisationsinitiator enthalten, der unter den Polymerisationsbedingungen radikalisch zerfällt. Man unterscheidet thermische und Redox-Initiatoren. Zur erstgenannten Gruppe gehören wasserlösliche Peroxoverbindungen, wie Alkali- oder Ammoniumperoxodisulfat, oder wasserlösliche Azoverbindungen, wie Azo-bis-cyanvaleriansäure bzw. ihre Salze. Sie zerfallen bei 50-100°C, insbesondere 70-90°C zu polymerisationsauslösenden radikalischen Bruchstücken. Redox-Initiatoren bestehen aus einer oxydierenden Komponente, wie Alkali- oder Ammoniumperoxodisulfat oder Wasserstoffperoxid, und einer reduzierenden Komponente, wie Bisulfit, Rongalit oder tert. aromatischen Aminen. Die Initiatormenge liegt vorzugsweise im Bereich von 0,01 bis 0,5 Gew.-% bezogen auf die Monomeren.

Die Emulsionspolymerisation
kann in der Weise, wie sie für die Herstellung des Saatlatex beschrieben wurde, eingeleitet werden, wobei Latexkeime neu gebildet werden. Es ist jedoch auch möglich und häufig bevorzugt, in die vorgelegte Wasserphase vor Beginn der Emulsionspolymerisation schon eine kleine Menge des Saatlatex einzubringen. Diese Arbeitsweise hat den Vorteil, dass sich das Teilchenzahlenverhältnis der grossteiligen und der kleinteiligen Fraktion des Emulsionspolymerisats sehr genau vorausbestimmen lässt.

Die Monomeren werden als solche oder in Form einer wässrigen Emulsion im Laufe der Polymerisation allmählich nach Massgabe des Umsatzes unter Polymerisationsbedingungen so zugesetzt, dass sich keine grossen Mengen an nicht umgesetzten Monomeren ansammeln. Eine gleichmässige Zugabe der Monomeren im Laufe von 0,5 bis 5 Stunden unter Rühren ist im allgemeinen zweckmässig. Die freiwerdende Polymerisationswärme kann über die Kesselwand durch Kühlung abgeführt werden.

Die Polymerisationstemperatur wird den Zerfallseigenschaften des Polymerisationsinitiators angepasst und durch Kühlung auf den gewünschten Wert gehalten. Bei Verwendung von thermisch zerfallenden Initiatoren liegt die Polymerisationstemperatur meistens im Bereich von 60 bis 90 °C. Redox-Initiatorsysteme sind vorzugsweise im Bereich von 20 bis 60°C wirksam. Kräftiges Rühren während der Emulsionspolymerisation ist empfehlenswert.

Sobald die Latexteilchen bei der Emulsionspolymerisation auf das gewünschte Teilchengrössenverhaltnis in Bezug auf den Saatlatex angewachsen sind, beginnt dessen Zusatz. Vorzugsweise wird der Saatlatex auf einmal zugegeben, jedoch ist auch ein Zusatz über einen längeren Zeitraum oder in mehreren Anteilen möglich, jedoch soll der Zusatz abgeschlossen sein, bevor mehr als 40 Gew.-% der Monomeren zugesetzt und polymerisiert worden sind. Es ist möglich, aber nicht notwendig, die Zufuhr der Monomeren während der Saatlatexzugabe zu unterbrechen. Die Polymerisation wird nach der Saatlatexzugabe unverändert fortgesetzt. Nach Abschluss der Polymerisation wird vorzugsweise noch einige Stunden unter Polymerisationsbedingungen nachgerührt. Daran können sich übliche Massnahmen zur Restmonomerentfernung, zur Nachstabilisierung durch weiteren Emulgiermittelzusatz oder zur Einstellung eines anderen pH-Wertes anschliessen.

Polymodale Dispersionen entstehen nach dem Verfahren der Erfindung, wenn der Saatlatex zu zwei oder mehr deutlich voneinander getrennten Zeitpunkten zugesetzt wird oder wenn als Saatlatex bereits eine bi- oder polymodale Dispersion verwendet wird.

## Patentansprüche

1. Verfahren zur Herstellung einer wäßrigen, bi- oder polymodalen Kunststoffdispersion durch Emulsionspolymerisation von äthylenisch ungesättigten, wenigstens zum Teil in Wasser schwerlöslichen Monomeren in wäßriger Phase, die ein Emulgiermittel und einem wasserlöslichen Polymerisationsinitiator enthält, und Zugabe eines Saatlatex während der Emulsionspolymerisation, dadurch gekennzeichnet, daß die Monomeren als solche oder in Form einer wäßrigen Emulsion allmählich unter Polymerisationsbedingungen zugegeben werden, daß der Saatlatex zugesetzt wird, bevor mehr als 40 Gew. -% der Monomeren polymerisiert sind, daß die Teilchen des Saatlatex um einen Faktor zwischen 2 und 15 kleiner sind als die durch die Emulsionspolymerisation bereits gebildeten Teilchen und daß die Gewichtsmenge der Kunststoffteilchen in dem Saatlatex 10 Gew.-%, bezogen auf das Gewicht der Monomeren, nicht überschreitet, und zu dem Gewicht der bereits polymerisierten Monomeren in einem Verhältnis zwischen 1 : 4 und 1 : 500 steht, wobei die Gewichtssumme der wäßrigen Phase mehr als 70 Gew.-Teile, bezogen auf 100 Gew.-Teile der Gewichtssumme der Monomeren und des in dem Saatlatex enthaltenen Kunststoffes, ausmacht.

2. Verfahren nach Anspruch 1, dadurch gekennzeichnet, dass die Emulsionspolymerisation in Gegenwart einer zusätzlichen Menge des Saatlatex begonnen wird.

3. Verfahren nach den Ansprüchen 1 oder 2, dadurch gekennzeichnet, dass die Monomeren als solche oder in Form einer wässrigen Emulsion allmählich unter Polymerisationsbedingungen zugegeben werden.

## Claims

1. Process for preparing an aqueous, bi- or polymodal plastics dispersion by emulsion polymerisation of ethylenically unsaturated monomers, at least some of which are difficultly soluble in water, in an aqueous phase containing an emulsifier and a water-soluble polymerisation initiator, and the addition of a seed latex during emulsion polymerisation, characterised in that the monomers are added gradually, under polymerisation conditions, as such, or in the form of an aqueous emulsion, the seed latex is added before more than 40% by weight of the monomers are polymerised, the particles of the monomers are polymerised, the particles of the seed latex are smaller, by a factor of between 2 and 15, than the particles already formed by emulsion polymerisation and the quantity of plastics particles by weight in the seed latex does not exceed 10% by weight, based on the weight of the monomers, and is in a ratio of between 1:4 and 1:500 to the weight of the monomers already polymerised, the total weight of the aqueous phase representing more than 70 parts by weight, based on 100 parts by weight of the total weight of the monomers and the plastics contained in the seed latex.

2. Process as claimed in claim 1, characterised in that emulsion polymerisation is started in the presence of an additional quantity of the seed latex.

3. Process as claimed in claim 1 or 2, characterised in that the monomers are added gradually, under polymerisation conditions, as such or in the form of an aqueous emulsion.

## Revendications

1. Procédé pour la préparation d'une dispersion aqueuse bi- ou polymodale de matière plastique par polymérisation en émulsion de monomères éthyléniquement insaturés, au moins en partie difficilement solubles dans l'eau, dans une phase aqueuse qui contient un émulsifiant et un initiateur de polymérisation hydrosoluble, et par addition d'un latex germe pendant la polymérisation en émulsion, caractérisé en ce que les monomères, en tant que tels ou sous forme d'une émulsion aqueuse, sont ajoutés peu à peu dans des conditions de polymérisation, en ce que le latex germe est ajouté avant que plus de 40% en poids des monomères ne soient polymérisés, en ce que les particules du latex germe sont plus petites, d'un facteur compris entre 2 et 15, que les particules déjà formées par la polymérisation en émulsion et en ce que la quantité en poids des particules de matière plastique dans le latex germe ne dépasse pas 10% en poids sur la base du poids des monomères et est, au poids des monomères déjà polymérisés, dans un rapport compris entre 1:4 et 1:500, la somme en poids de la phase aqueuse représentant plus de 70 parties en poids pour 100 parties en poids de la somme en poids des monomères et de la matière plastique contenue dans le latex germe..

2. Procédé selon la revendication 1, caractérisé en ce que la polymérisation en émulsion est amorcée en présence d'une quantité supplémentaire du latex germe.

3. Procédé selon la revendication 1 ou 2, caractérisé en ce que les monomères, en tant que tels ou sous forme d'une émulsion aqueuse, sont ajoutés peu à peu dans des conditions de polymérisation.
